# EUROPEAN PATENT APPLICATION

(11) **EP 4 847 916 A1**
(43) Date of publication of application: **02.12.2026**
(21) Application number: 25305786.3
(22) Date of filing: 30.05.2025
(51) Int. Cl.: G01N 30/86, G01N 30/72

(54) **SYSTEMS AND METHODS FOR IMPROVED QUANTITATIVE ANALYSIS IN TARGETED MASS SPECTROMETRY**

(71) Applicant: Thermo Finnigan LLC, San Jose, CA 95134 (US); Thermo Electron SAS, 91140 Villebon-sur-Yvette (FR); Thermo Fisher Scientific HR Services Mexico S de RL de CV, Nápoles, Benito Juárez (MX)
(72) Inventor: Remes, Philip, San Jose, CA, 95134 (US); Lacout, Fabrice, 91140 VILLEBON-SUR-YVETTE (FR); Escamilla, Carlos, 03840 Ciudad de Mexico (MX)
(74) Representative: Boult Wade Tennant LLP

(57) **Abstract**

An illustrative system comprises a memory that stores instructions and a processor communicatively coupled to the memory and configured to execute the instructions to perform a process. The process comprises obtaining reference data representative of mass spectral intensity as a function of time for a plurality of target analytes, the reference data including a reference extracted ion chromatogram ("XIC") for each characteristic ion included in a set of characteristic ions that are characteristic of a target analyte, obtaining experimental data representative of mass spectral intensity as a function of time for a plurality of analytes present in a sample, generating a set of individual characteristic ion similarity correlations, generating a target similarity correlation for the target analyte; and selecting, based on the target similarity correlation for the target analyte, contemporaneous peaks in the set of observed XICs as representative of the target analyte and determining corresponding peak integration regions.

## Description

### BACKGROUND INFORMATION

A mass spectrometer is a sensitive instrument that may be used to detect, identify, and/or quantify molecules based on the mass-to-charge ratio (m/z) of ions produced from the molecules. A mass spectrometer generally includes an ion source for producing ions from molecules included in a sample, a mass analyzer for separating the ions based on their m/z, and an ion detector for detecting the separated ions. The mass spectrometer may include or be connected to a computer-based software platform that uses data from the ion detector to construct a mass spectrum that shows a relative abundance of each of the detected ions as a function of m/z. The mass spectrum may be used to detect and quantify molecules in simple and complex mixtures. A separation system, such as a liquid chromatograph (LC), gas chromatograph (GC), or capillary electrophoresis (CE) system, may be coupled to the mass spectrometer in a combined system (e.g., LC-MS, GC-MS, or CE-MS system) to separate components in the sample before the components are introduced to the mass spectrometer.

One application of mass spectrometry is the identification, quantification, and structural elucidation of peptides, proteins, and related molecules in complex biological samples. In some such experiments, often referred to as tandem mass spectrometry (MS/MS or MS2) or multi-stage mass spectrometry (MSn where n is 2 or more), certain ions are fragmented in a controlled manner to yield product ions. A mass analysis (referred to as an MS/MS, MS2, or MSn analysis) is then performed on the product ions to generate mass spectra of the product ions. The mass spectra of the product ions provide information that may be used to confirm identification, determine quantity, and/or derive structural details regarding analytes of interest.

The information represented in the mass spectra typically includes one or more peaks representative of product ions for a particular analyte of interest that may be selected and used to quantify the analyte of interest (e.g., through integration). Conventional methods for peak picking of product ions in targeted mass spectrometry have low error rates but still require manual intervention that exceeds the time available to many operators when analysis encompasses more than a few hundred analytes and/or replicates.

### SUMMARY

The following description presents a simplified summary of one or more aspects of the methods and systems described herein to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

An illustrative system comprises a memory that stores instructions; and a processor communicatively coupled to the memory and configured to execute the instructions to perform a process comprising: obtaining reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating a set of individual characteristic ion similarity correlations by correlating each reference XIC with a corresponding observed XIC; generating a target similarity correlation for the target analyte based on a combination of individual characteristic ion similarity correlations included in the set of individual characteristic ion similarity correlations; and selecting, based on the target similarity correlation for the target analyte, contemporaneous peaks in the set of observed XICs as representative of the target analyte.

An illustrative computer program product is embodied in a non-transitory computer readable storage medium and comprises computer instructions for performing a process for mass spectrometry comprising obtaining reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating a set of individual characteristic ion similarity correlations by correlating each reference XIC with a corresponding observed XIC; generating a target similarity correlation for the target analyte based on a combination of individual characteristic ion similarity correlations included in the set of individual characteristic ion similarity correlations; and selecting, based on the target similarity correlation for the target analyte, contemporaneous peaks in the set of observed XICs as representative of the target analyte.

An illustrative method comprises: obtaining, by a mass spectrometry analysis system, reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining, by the mass spectrometry analysis system, experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating, by the mass spectrometry analysis system, a set of individual characteristic ion similarity correlations by correlating each reference XIC with a corresponding observed XIC; generating, by the mass spectrometry analysis system, a target similarity correlation for the target analyte based on a combination of the set of individual characteristic ion similarity correlations; and selecting, by the mass spectrometry analysis system and based on the target similarity correlation for the target analyte, contemporaneous peaks in the set of observed XICs as representative of the target analyte.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a functional diagram of an illustrative liquid chromatography-mass spectrometry (LC-MS) system.
FIG. 2 shows a functional diagram of an illustrative implementation of mass spectrometer that may be included in the LC-MS system of FIG 1.
FIG. 3 shows an illustrative diagram depicting extracted ion chromatograms for a target analyte.
FIG. 4 shows a functional diagram of an illustrative mass spectrometry analysis system that may be used for analysis of mass spectrometry data.
FIG. 5 shows an illustrative flow diagram depicting operations that may be performed according to principles described herein to facilitate identifying and quantifying a target analyte.
FIG. 6 shows an illustrative flow diagram depicting operations that may be performed according to principles described herein to facilitate peak picking based on neighbor product ion cross-correlations.
FIGS. 7A and 7B show diagrams depicting illustrative reference data and experimental data.
FIG. 8A shows illustrative correlations that may be determined according to principles described herein.
FIG. 8B shows an illustrative scoring of the peaks shown in FIG. 7B based on the correlations depicted in FIG. 8A.
FIG. 9 shows an illustrative flow diagram depicting operations that may be performed according to principles described herein to facilitate analysis of targeted mass spectrometry data.
FIG. 10 shows an illustrative graphical user interface view.
FIG. 11 shows an illustrative method for improved quantitative analysis in targeted mass spectrometry.
FIG. 12 shows an illustrative computing device.

### DETAILED DESCRIPTION

Systems and methods for improved quantitative analysis in targeted mass spectrometry are described herein. For example, an illustrative system comprises a memory that stores instructions and a processor communicatively coupled to the memory and configured to execute the instructions to perform a process. The process comprises obtaining reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating a set of individual characteristic ion similarity correlations by correlating each reference XIC with a corresponding observed XIC; generating a target similarity correlation for the target analyte based on a combination of individual characteristic ion similarity correlations included in the set of individual characteristic ion similarity correlations; and selecting, based on the target similarity correlation for the target analyte, contemporaneous peaks in the set of observed XICs as representative of the target analyte.

The systems and methods described herein result in improved analyte peak identification for more precise and accurate quantitative analysis of mass spectrometry data in a manner that may lower limits of detection and requires minimal user intervention. For example, systems and methods such as those described herein facilitate at least the following improvements: 1) more accurate peak picking using a correlation (e.g., a cross-correlation) of reference data to experimental data using multiple product ions per analyte; 2) more accurate peak picking using the correlation results from analytes that elute in the neighborhood of a target analyte; 3) correction of peak picking results using multiple techniques including analysis of the neighbor analyte elution times; and 4) one or more graphical user interface views that allow for fast review and/or correction of any ambiguous results. Moreover, improvements in peak picking may be extended to the task of real-time chromatogram alignment, allowing for narrower scheduled target acquisition windows and concomitant improvements in assay capacity, throughput, and/or sensitivity.

Various embodiments will now be described in more detail with reference to the figures. The systems and methods described herein may provide one or more of the benefits mentioned above and/or various additional and/or alternative benefits that will be made apparent herein.

In some implementations, the methods and systems described herein may be used in conjunction with a combined separation-mass spectrometry system, such as a liquid chromatography-mass spectrometry (LC-MS) system. As such, an LC-MS system will now be described. The described LC-MS system is illustrative and not limiting. The methods and systems described herein may operate as part of or in conjunction with the LC-MS system described herein and/or with any other suitable separation-mass spectrometry system, including a high-performance liquid chromatography-mass spectrometry (HPLC-MS) system, a gas chromatography-mass spectrometry (GC-MS) system, or a capillary electrophoresis-mass spectrometry (CE-MS) system. The methods and systems described herein may also operate in conjunction with any other continuous flow sample source, such as a flow-injection mass spectrometry system (FI-MS) in which analytes are injected into a mobile phase (without separation in a column) and enter the mass spectrometer with time-dependent variations in intensity (e.g., Gaussian-like peaks).

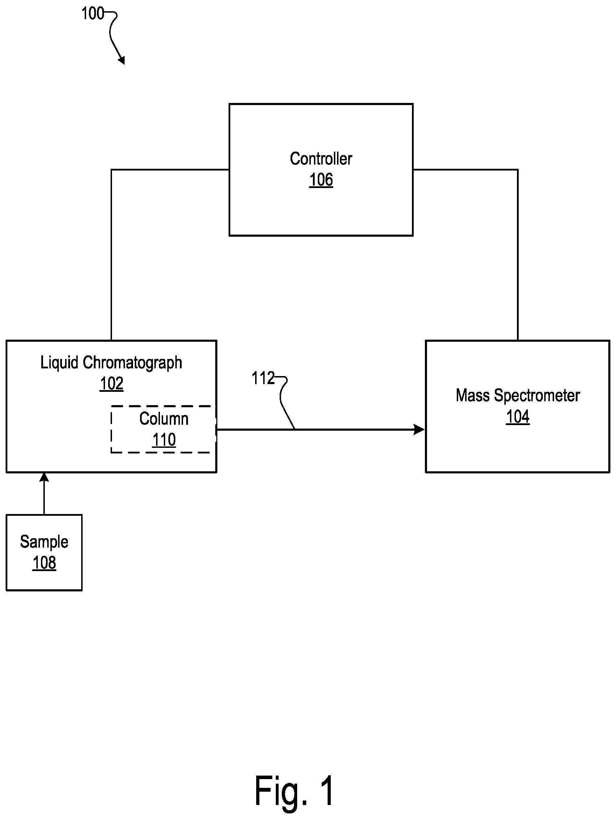

FIG. 1 shows a functional diagram of an illustrative LC-MS system 100. LC-MS system 100 includes a liquid chromatograph 102, a mass spectrometer 104, and a controller 106. Liquid chromatograph 102 is configured to separate, over time, components (e.g., analytes) within a sample 108 that is injected into liquid chromatograph 102. Sample 108 may include, for example, chemical components (e.g., molecules, ions, etc.) and/or biological components (e.g., metabolites, proteins, peptides, lipids, etc.) for detection and analysis by LC-MS system 100. Liquid chromatograph 102 may be implemented by any liquid chromatograph as may suit a particular implementation. In liquid chromatograph 102, sample 108 may be injected into a mobile phase (e.g., a solvent), which carries sample 108 through a column 110 containing a stationary phase (e.g., an adsorbent packing material). As the mobile phase passes through column 110, components within sample 108 elute from column 110 at different times based on, for example, their size, their affinity to the stationary phase, their polarity, and/or their hydrophobicity.

A detector (e.g., an ion detector component of mass spectrometer 104, an ion-electron converter and electron multiplier, etc.) may measure the relative intensity of a signal modulated by each separated component in eluate 112 from column 110. Data generated by the detector may be represented as a chromatogram, which plots time on the X-axis and a signal representative of the relative intensity on the Y-axis. The retention time of a component is generally measured as the period of time between injection of sample 108 into the mobile phase and the relative intensity peak maximum after chromatographic separation. In some examples, the relative intensity may be correlated to or representative of relative abundance of the separated components. Data generated by liquid chromatograph 102 may be output to controller 106.

In some cases, particularly in analyses of complex mixtures, multiple different components in sample 108 co-elute from column 110 at approximately the same time, and thus may have the same or similar retention times. As a result, determination of the relative intensity of the individual components within sample 108 requires further separation of signals attributable to the individual components. To this end, liquid chromatograph 102 directs components included in eluate 112 to mass spectrometer 104 for identification and/or quantification of one or more of the components.

Mass spectrometer 104 is configured to produce ions from the components received from liquid chromatograph 102 and sort or separate the produced ions based on a mass-to-charge ratio (m/z) of the ions. Mass spectrometer 104 may be implemented by a multi-stage mass spectrometer configured to perform multi-stage mass spectrometry (denoted MSn where n is 2 or more) or a tandem mass spectrometer configured to perform tandem mass spectrometry (a form of multi-stage mass spectrometry denoted MS/MS or MS2 (where n is 2)). A detector in mass spectrometer 104 measures the intensity of the signal produced by the ions. As used herein, "intensity" or "signal intensity" refers to the response of the detector and may represent absolute abundance, relative abundance, ion count, intensity, relative intensity, ion current, or any other suitable measure of ion detection. Data acquired by mass spectrometer 104 may be output to controller 106. Data generated by the detector may be represented by mass spectra, which plot the intensity of the observed signal as a function of m/z of the detected ions.

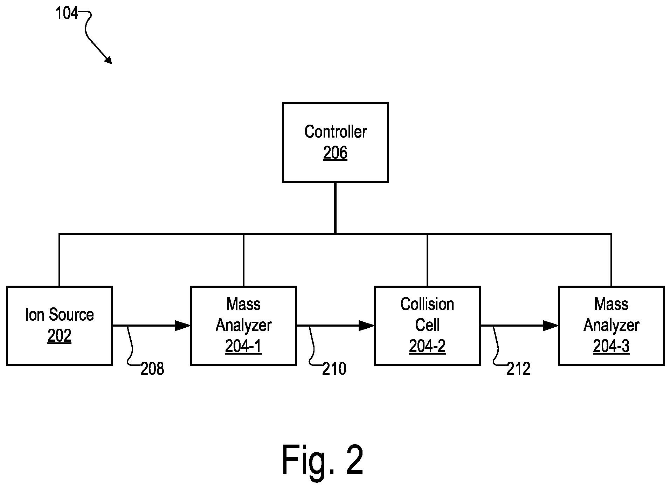

FIG. 2 shows a functional diagram of an illustrative implementation of mass spectrometer 104. As shown, mass spectrometer 104 includes an ion source 202, a first mass analyzer 204-1, a collision cell 204-2, a second mass analyzer 204-3, and a controller 206. Mass spectrometer 104 may further include any additional or alternative components not shown as may suit a particular implementation (e.g., ion optics, filters, ion stores, an autosampler, a detector, etc.).

Ion source 202 is configured to produce a stream 208 of ions from the separated components in sample 108 and deliver the ions to first mass analyzer 204-1. Ion source 202 may use any suitable ionization technique, including without limitation electron ionization, chemical ionization, matrix assisted laser desorption/ionization, electrospray ionization, atmospheric pressure chemical ionization, atmospheric pressure photoionization, inductively coupled plasma, and the like. Ion source 202 may include various components for producing ions from components included in sample 108 and delivering the ions to first mass analyzer 204-1.

First mass analyzer 204-1 is configured to receive ion stream 208, isolate precursor ions of a selected m/z range (a precursor m/z range) and deliver a beam 210 of precursor ions to collision cell 204-2. Collision cell 204-2 is configured to receive beam 210 of precursor ions and produce product ions (e.g., fragment ions) via controlled dissociation processes. Collision cell 204-2 is further configured to direct a beam 212 of product ions to second mass analyzer 204-3. Second mass analyzer 204-3 is configured to filter and/or perform a mass analysis of the product ions.

Mass analyzers 204-1 and 204-3 are configured to isolate or separate ions according to m/z of each of the ions. Mass analyzers 204-1 and 204-3 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap mass analyzer, a Kingdon trap, etc.), a Fourier transform ion cyclotron resonance (FT-ICR) mass analyzer, and the like. Mass analyzers 204-1 and 204-3 need not be implemented by the same type of mass analyzer or may be a single device capable of performing multiple stages of MS.

Collision cell 204-2 may be implemented by any suitable collision cell. As used herein, "collision cell" may encompass any structure or device configured to produce product ions via controlled dissociation processes and is not limited to devices employed for collisionally-activated dissociation. For example, collision cell 204-2 may be configured to fragment precursor ions using collision induced dissociation, electron transfer dissociation, electron capture dissociation, photo induced dissociation, surface induced dissociation, ion/molecule reactions, and the like. Collision cell 204-2 may be the same device as mass analyzers 204-1 and 204-3.

An ion detector (not shown) is configured to detect ions at each of a variety of different m/z and responsively generate an electrical signal representative of ion intensity. The electrical signal is transmitted to controller 206 for processing, such as to construct a mass spectrum of the sample. For example, mass analyzer 204-3 may emit an emission beam of separated ions to the ion detector, which is configured to detect the ions in the emission beam and generate or provide data that can be used by controller 206 to construct a mass spectrum of the sample. The ion detector may be implemented by any suitable detection device, including without limitation an electron multiplier, a Faraday cup, and the like. In other examples, such as where second mass analyzer 204-3 is implemented by an orbital electrostatic trap mass analyzer, second mass analyzer 204-3 functions as both a mass analyzer and a detector.

Controller 206 may be communicatively coupled with, and configured to control operations of, mass spectrometer 104. For example, controller 206 may be configured to control operation of various hardware components included in ion source 202 and/or mass analyzers 204-1 and 204-3. To illustrate, controller 206 may be configured to control an accumulation time of ion source 202 and/or mass analyzers 204, control an oscillatory voltage power supply and/or a DC power supply to supply an RF voltage and/or a DC voltage to mass analyzers 204, adjust values of the RF voltage and DC voltage to select an effective m/z (including a mass tolerance window) for analysis, and adjust the sensitivity of the ion detector (e.g., by adjusting the detector gain).

Controller 206 may include any suitable hardware (e.g., a processor, circuitry, etc.) and/or software as may serve a particular implementation. While FIG. 2 shows that controller 206 is included in mass spectrometer 104, controller 206 may alternatively be implemented in whole or in part separately from mass spectrometer 104, such as by a computing device communicatively coupled to mass spectrometer 104 by way of a wired connection (e.g., a cable) and/or a network (e.g., a local area network, a wireless network (e.g., Wi-Fi), a wide area network, the Internet, a cellular data network, etc.). In some examples, controller 206 may be implemented in whole or in part by controller 106.

In the example of FIG. 2, mass spectrometer 104 is tandem-in-space (e.g., has multiple mass analyzers) and has two stages for performing tandem mass spectrometry. However, mass spectrometer 104 is not limited to this configuration but may have any other suitable configuration. For example, mass spectrometer 104 may be tandem-in-time. Additionally or alternatively, mass spectrometer 104 may be a multi-stage mass spectrometer and may have any suitable number of mass analyzers and stages (e.g., three or more) for performing multi-stage mass spectrometry (e.g., MS/MS/MS).

Referring again to FIG. 1, controller 106 is communicatively coupled with, and configured to control operations of, LC-MS system 100 (e.g., liquid chromatograph 102 and mass spectrometer 104). Controller 106 may include any suitable hardware (e.g., a processor, circuitry, etc.) and/or software configured to control operations of and/or interface with the various components of LC-MS system 100 (e.g., liquid chromatograph 102 or mass spectrometer 104).

Controller 106 and/or controller 206 may also include and/or provide a user interface configured to enable user interaction with LC-MS system 100 or mass spectrometer 104. The user may interact with controller 106 and/or controller 206 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 106 and/or controller 206. In other examples, the display device and/or input device may be separate from, but communicatively coupled to, controller 106 and/or controller 206. For instance, the display device and the input device may be included in a computer (e.g., a desktop computer, a laptop computer, etc.) communicatively connected to controller 106 and/or controller 206 by way of a wired connection (e.g., by one or more cables) and/or a wireless connection.

Controller 106 acquires data acquired over time by LC-MS system 100. The data may include a series of mass spectra including intensity values of ions produced from the analytes included in sample 108 as a function of m/z of the ions. The series of mass spectra may be represented in a three-dimensional map in which elution time (e.g., retention time) is plotted along an X-axis of the map, m/z is plotted along a Y-axis of the map, and intensity is plotted along a Z-axis of the map. Spectral features on the map (e.g., Z-axis peaks of intensity) represent detection by LC-MS system 100 of ions produced from various analytes included in sample 108. The X-axis and Z-axis of the map may be used to generate an elution profile (e.g., a mass chromatogram) that plots detected intensity as a function of time for a selected m/z.

As used herein, a "selected m/z" refers to a specific m/z, with or without a mass tolerance window (e.g., +/- 0.5 m/z), or a narrow range of m/z (e.g., an isolation window with a width or range such as 20 m/z, 10 m/z, 4 m/z, 3 m/z, etc.). In a targeted MS2 or MSn analysis, such as a selected reaction monitoring (SRM) analysis, a multiple reaction monitoring (MRM) analysis, or a parallel reaction monitoring (PRM) analysis, the selected m/z corresponds to the m/z of the product ion of a distinct transition (precursor ion/product ion pair), and the recorded intensity as a function of time vector (e.g., trace) represents the elution profile for the distinct transition. The Y-axis and Z-axis of the map may be used to generate mass spectra, each mass spectrum plotting intensity as a function of m/z for a particular acquisition.

Targeted mass spectrometry experiments are designed to gather quantitative information about a set of target analytes, the identity of which are known before the experiment starts. The quantity of a target analyte may be determined by integrating the area under its elution peak. In some examples, quantitation of the target analyte includes summing the detected signal for multiple different selected m/z for product ions that are characteristic of the target analyte of interest and integrating the area under the summed signal. For example, a target analyte of interest may have multiple characteristic transitions, each of which may be summed to form an elution profile with an increased signal to noise ratio. Thus, as used herein, "selected m/z" may also be a combination of multiple distinct m/z or m/z ranges. For example, the selected m/z for a target analyte of interest may be the combination of multiple distinct m/z or m/z ranges for each ion (e.g., precursor ion and/or product ion) characteristic of the target analyte of interest, and the elution profile for the selected m/z may be the summed signal of each distinct m/z or m/z range. In further examples, the multiple distinct m/z or m/z ranges span the full m/z spectrum, wherein the elution profile is a total ion current (TIC).

As used herein, "product ion m/z", "m/z of a product ion," or other similar term may refer to the selected m/z of a product ion derived from a fragmented precursor ion.

As used herein, an "acquisition" refers to a mass analysis performed at a discrete point in time to acquire a single mass spectrum across an m/z range of interest (e.g., a selected m/z). It will be recognized that, in some targeted MS2 analyses, true "spectra" are not acquired in that the detected intensity as a function of time is acquired or recorded for only a selected m/z and not for a broad m/z spectrum. Nevertheless, for ease of discussion herein, the recorded intensity vs. time vector for such targeted MS2 analyses is referred to herein as a mass spectrum.

As used herein, "acquisition window" refers to a segment of time during which a mass analysis is performed for a selected precursor m/z (one or more active target analytes) to acquire a set of mass spectra for the selected m/z. The acquisition window is preferably positioned across the elution peak for the selected precursor m/z so that a plurality of acquisitions are acquired for the selected precursor m/z. Typically, the sampling rate for the plurality of acquisitions is set to satisfy a sampling rate requirement for the characteristic elution peak width of the selected precursor m/z. The width of the acquisition window ("acquisition window width") is ideally equal to the elution peak width for the selected m/z, but in most examples the acquisition window width is larger than the elution peak width for the selected m/z, such as by a factor of 2, 3, or 4, to capture data both before and after the elution peak. In other experiments, such as when multiplexing a sample and determining quantitative information based on ratios of peaks in the spectrum, the acquisition window is configured to acquire only a single mass spectrum at or near the apex of peaks.

In targeted experiments, a mass analysis is performed for a fixed, known list of analytes included in a sample. Given some knowledge about the analytes' expected elution times from the separation system, an acquisition schedule is created that specifies which analytes the mass spectrometer will target for mass analysis at which time during the experiment (referred to as "target analytes"). For chromatographic separation applications, an analyte's elution time refers to retention time, which is generally measured as the period of time between injection of the sample into the mobile phase and the relative intensity peak maximum after chromatographic separation. For capillary electrophoresis applications, in which analytes are not retained but instead continuously migrate, an analyte's elution time refers to migration time. Migration time is generally measured as the period of time taken for an analyte to migrate from the beginning of the capillary to a detection location. For ion mobility separations, an analyte's elution time refers to drift time of the analyte through a buffer gas, which may take place either in-space (e.g. a drift tube) or in-time (e.g. a trapped ion mobility cell).

As used herein, "characteristic ions" may refer to any ions that are characteristic of a target analyte and include, without limitation, characteristic product ions that are derived from or fragmented from a precursor ion, an unfragmented precursor ion, an isotope of an unfragmented precursor ion (e.g., the monoisotopic m/z M, a second isotope M+1, a third isotope M+2, etc.), or any combination thereof.

The exemplary flow diagrams and examples described herein reference using characteristic product ions to perform various operations, such as quantitative analysis operations and retention time shift correction operations. However, it is understood that any type or combination of characteristic ions, such as unfragmented precursor ions and isotopic ions as described herein, may be used in addition to, or in place of, characteristic product ions as may serve a particular implementation.

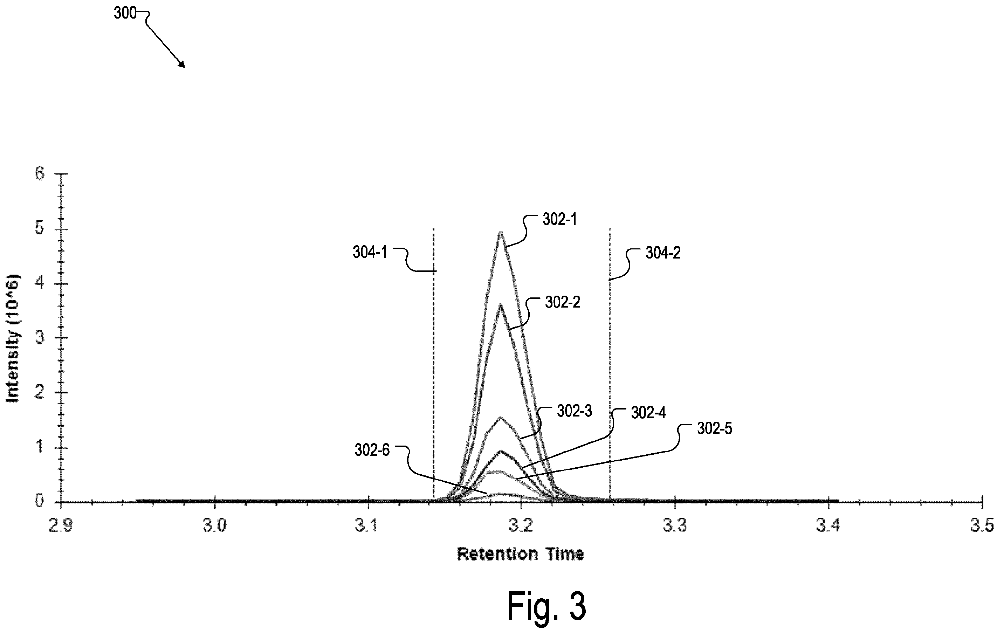

As noted above, quantitative analysis of analyte abundance in mass spectrometry experiments is typically based on the numerical integration of extracted ion chromatograms (e.g., those produced by a set of one or more characteristic product ions produced by dissociation of the analyte). FIG. 3 shows an illustrative diagram 300 depicting extracted ion chromatograms (XICs) 302 (e.g., XIC 302-1 through XIC 302-6) of six product ions resulting from dissociation of the peptide ADLSGITGAR. The abundance of the analyte may be determined by integrating the areas of each XIC 302 within integration boundaries 304-1 and 304-2 and summing the areas together.

FIG. 3 represents an ideal case where there are no other compounds with appreciable abundance that elute in the neighborhood of the analyte of interest (e.g., the peptide ADLSGITGAR). However, analytes of interest exist over wide ranges of abundance, and in many cases, the value of an assay is judged by the range over which accurate measurements can be made. When an analyte is near its limit of detection, that is, barely distinguishable above the background chemical or electronic noise, the task of determining the proper integration boundaries can be much more difficult.

Because of variations in analyte retention time across replicates, an analysis cannot rely on simple integration of the same time bounds for each replicate, but an algorithm must be used to select a suitable integration range. A more difficult situation occurs where signals from a first analyte have nearly the same magnitude as those of a second analyte that elutes within a similar time frame. In such examples, the algorithm may incorrectly set the integration bounds. These types of errors occur at a low rate in studies that utilize spiked-in internal standards, and more frequently in specific circumstances such as dilution curve experiments. Even error rates in the few percents are enough to make the analysis of a large number of compounds and/or replicates impossible or, at the least, extremely time-consuming.

To address these problems, the systems and methods described herein use various cross-correlations to facilitate peak picking, determining retention times, and/or correcting errors. Examples of such cross-correlations are described herein.

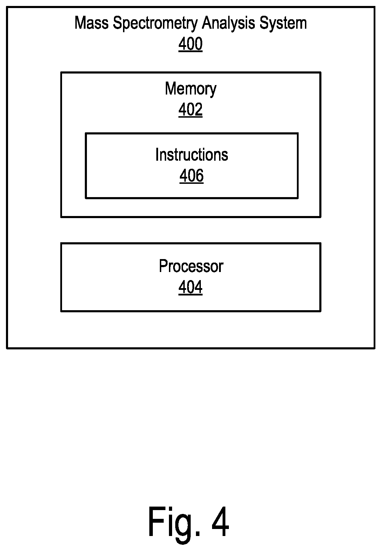

A mass spectrometry analysis system may control and/or perform one or more operations associated with peak picking, determining retention times, and/or correcting errors. FIG. 4 shows a functional diagram of an illustrative mass spectrometry analysis system 400 ("system 400"). System 400 may be implemented entirely or in part by LC-MS system 100 (e.g., by controller 106 and/or controller 206). Alternatively, system 400 may be implemented separately from LC-MS system 100 (e.g., a remote computing system or server separate from but communicatively coupled to controller 106 and/or controller 206).

System 400 may include, without limitation, a memory 402 and a processor 404 selectively and communicatively coupled to one another. Memory 402 and processor 404 may each include or be implemented by hardware and/or software components (e.g., processors, memories, communication interfaces, instructions stored in memory for execution by the processors, etc.). In some examples, memory 402 and processor 404 may be distributed between multiple devices and/or multiple locations as may serve a particular implementation.

Memory 402 may maintain (e.g., store) executable data used by processor 404 to perform any of the operations described herein. For example, memory 402 may store instructions 406 that may be executed by processor 404 to perform any of the operations described herein. Instructions 406 may be implemented by any suitable application, software, code, and/or other executable data instance.

Memory 402 may also maintain any data acquired, received, generated, managed, used, and/or transmitted by processor 404. For example, memory 402 may maintain LC-MS data (e.g., acquired chromatogram data, reference data, and/or mass spectra data).

Processor 404 may be configured to perform (e.g., execute instructions 406 stored in memory 402 to perform) various processing operations described herein. It will be recognized that the operations and examples described herein are merely illustrative of the many different types of operations that may be performed by processor 404. In the description herein, any references to operations performed by system 400 may be understood to be performed by processor 404 of system 400. Furthermore, in the description herein, any operations performed by system 400 may be understood to include system 400 directing or instructing another system or device to perform the operations.

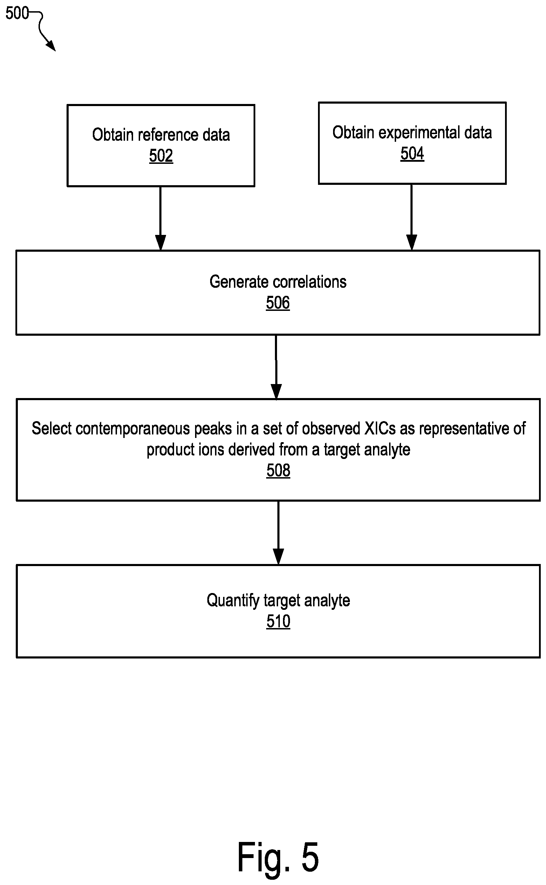

FIG. 5 shows an illustrative flow diagram 500 depicting various operations that may be performed by system 400 to facilitate improved quantitative analysis in targeted mass spectrometry. While FIG. 5 shows illustrative operations according to one embodiment, other embodiments may omit, add to, reorder, and/or modify any of the operations shown in FIG. 5.

At operation 502, system 400 obtains reference data representative of mass spectral intensity as a function of time for a plurality of target analytes. System 400 may obtain the reference data from any suitable source. For example, system 400 may access the reference data from any suitable database that maintains any suitable information associated with analytes (e.g., elution times, precursor ions, product ions, etc.). In certain implementations, system 400 may additionally or alternatively generate the reference data in any suitable manner based on prior targeted mass spectrometry experiments or even based on in silico calculations of spectra, peak shapes, and retention times. For example, in certain implementations, reference data may correspond to data retrieved from a first experimental run that acts as a base for comparison with subsequent experimental runs (replicates). The reference data obtained at operation 502 may include any suitable data. For example, the reference data may include a reference extracted ion chromatogram ("XIC") for each characteristic product ion (or selected m/z for the product ion) included in a set of characteristic product ions derived from a target analyte. It will be recognized that the set of characteristic product ions derived from the target analyte does not necessarily include all characteristic product ions that may be derived from the target analyte. For example, the set of characteristic product ions may be limited to a relatively small number, such as, 3, 4, 5, 6, 7, 8, etc. In additional or alternative implementations, the reference data may further include precursor ion XICs and/or one or more isotopes of precursor XICs.

At operation 504, system 400 obtains experimental data representative of mass spectral intensity as a function of time for a plurality of analytes present in a sample. The experimental data may be generated by performing a targeted mass analysis of the sample. The experimental data includes a set of observed XICs that includes an observed XIC for each m/z corresponding to the m/z of a characteristic product ion derived from the target analyte.

At operation 506, system 400 generates correlations for a given target analyte based on the experimental data and the reference data. System 400 may use any suitable correlation technique to facilitate determining the similarity between experimental data and reference data as a function of time. For example, in certain examples described herein, cross-correlations are used to determine the similarity as a function of time. Cross-correlations are a series of time-shifted dot product operations, which may or may not be normalized by a suitable normalization factor, such as a vector norm, ex L2 norm, max, or sum, or a combination of these parameters from both vectors of the dot product. However, it is understood that other ways of generating a similarity versus time vector may additionally or alternatively be used besides cross-correlation. In certain examples, system 400 may additionally or alternatively use other kinds of similarity measures at different vector offsets, such as Euclidean distance, Manhattan distance, Minkowski distance, etc. The exemplary operations described with respect to FIG. 5 use cross-correlations. However, it is understood that operation 506 may be performed using other types of similarity correlations, such as the similarity correlations described herein.

The correlations represent a correlation value as a function of time over a time window encompassing the expected elution time for the target analyte (the "target time window"). The correlations may be generated in any suitable manner. For example, system 400 may generate a set of individual product ion cross-correlations by cross-correlating each individual reference XIC for the target analyte over the target time window with a corresponding observed XIC (e.g., an observed XIC for the m/z of a characteristic product ion for the target analyte over the target time window). System 400 may then generate a target cross-correlation for the target analyte based on a combination of the individual product ion cross-correlations, such as a multiplication or addition of the individual product ion cross-correlations (e.g., based on a product of multiplication of the individual cross-correlations). In certain examples, each of the individual product ion cross-correlations may be combined (e.g., multiplied or added together) to generate a target cross-correlation. In certain alternative examples, only a subset of the individual product ion cross-correlations may be combined (e.g., multiplied or added together). For example, only the product ion cross-correlations with the highest intensity peaks may be multiplied or added together to generate the target cross-correlation in certain examples. The target cross-correlation represents a target correlation value as a function of time over the target time window. The target cross-correlation may include one or more candidate correlation peaks.

At operation 508, system 400 selects, based on the target correlation for the target analyte, contemporaneous peaks in a set of corresponding observed XICs as representative of product ions derived from a target analyte. System 400 may select the contemporaneous peaks in any suitable manner. For example, system 400 may determine a score for the selected contemporaneous peaks in the set of corresponding observed XICs and select the contemporaneous peaks in the set of corresponding observed XICs based on the score. System 400 may determine a score for the selected contemporaneous peaks in any suitable manner. For example, system 400 may score a set of contemporaneous chromatographic peaks with a cosine similarity metric, which is calculated by computing a normalized dot product between the vectors comprising the integrated areas of the observed XICs and the reference XICs of the characteristic product ions. Other metrics may be used in addition to, or alternatively to, the cosine similarity. System 400 may then multiply the score (e.g., the dot product) of the contemporaneous peaks in the set of corresponding observed XICs by the target correlation to determine an adjusted score. System 400 may select the set of contemporaneous peaks based on the adjusted score.

In other examples, system 400 may identify the largest candidate correlation peak in the target correlation (e.g., the correlation peak having the highest correlation value) and select the contemporaneous peaks that correspond in time to the identified candidate correlation peak.

Multiplication of the individual product ion cross-correlations is more selective than other combination techniques, such as a simple correlation using the sum of product ion chromatograms or the sum of individual correlations of product ion chromatograms. This increased selectivity using multiplication of individual correlations may result from a requirement that some other compound have the same number of XICs and/or that each reference XIC has an appreciable signal. In this regard, it may be desirable to carefully curate the experimental data to ensure that there is not a transition with no appreciable signal. In examples where there may be a transition with no appreciable signal, the sum of correlations may be used instead of multiplication.

At operation 510, system 400 quantifies the target analyte based on the selected contemporaneous peaks in the set of observed XICs. System 400 may quantify the target analyte in any suitable manner. For example, system 400 may first determine integration boundaries for the target analyte. This may be accomplished in any suitable manner. For example, system 400 may determine 50% of a peak's max intensity value and estimate a base peak width plus a buffer. In certain additional or alternative examples, system 400 may analyze the derivatives of the XICs in the neighborhood of the peak to find peak edges. Additionally or alternatively, system 400 may use an analysis of the reference peak boundary to determine the integration boundary and place integration bounds of the same width on the experimental peak. Within the integration boundaries, system 400 may integrate an area under the selected contemporaneous peaks in the set of observed XICs to quantify the target analyte.

In certain examples, system 400 may calculate a combined target similarity correlation based on a combined neighbor similarity correlation and a target similarity correlation. This may be accomplished in any suitable manner. For example, system 400 may calculate the combined target similarity correlation by multiplying the combined neighbor similarity correlation and the target similarity correlation, by adding the combined neighbor similarity correlation and the target similarity correlation, or by any suitable combination thereof.

In certain examples, system 400 may use a target correlation to facilitate updating an analyte target schedule for future runs (e.g., replicates) of a target analyte. In such examples, system 400 may determine, based on a target correlation, a retention time shift for a target analyte. System 400 may determine the retention time shift in any suitable manner. For example, system 400 may compare an observed retention time of the target analyte to an expected retention time for the target analyte indicated in the reference data to determine whether there has been a retention time shift. Based on the retention time shift, system 400 may update the analyte target schedule for the future runs of the target analyte.

In certain examples, system 400 may use the observed signals of one or more other analytes that elute in the neighborhood of a target analyte to facilitate peak picking for the target analyte and/or to improve upon a retention time detection and correction methodology, such as an Adaptive Retention Time (RT) algorithm as described in U.S. Patent No. 11,841,352. The Adaptive RT algorithms perform cross-correlation of reference spectra against spectra collected in real-time to estimate the shift in retention time compared to the reference and update a target schedule. Through such methods, it is possible to reduce the size of scheduled acquisition windows by a factor of two or three-fold. Besides allowing users to not have to continuously monitor their assay results and update the schedule manually, the reduction in acquisition window size improves the utility of assays by enabling inclusion of more analytes in the assay and/or acquiring higher quality data with longer accumulation times. However, efforts to further reduce the size of the acquisition windows are hampered by the fact that the Adaptive RT estimations are global in nature, and the distribution of particular analytes retention times around the global shift is as wide as several LC peak widths.

Cross-correlations for observed signals from a set of neighboring analytes may be used by system 400 to determine the most likely retention time of another analyte whose signal may or may not be included in the set. The neighbor cross-correlations may be used in several ways. First, the neighbor cross-correlations may be used to help score candidate peaks. For example, each candidate peak's score for peak picking may be based on parameters such as the dot product (from a cosine similarity) adjusted based on the value of the neighbor correlations at their respective retention times. Second, the neighbor cross-correlations may be used to perform real-time chromatogram alignment. For example, the target schedule may be updated using the retention time of the maximum of the neighbor correlation as an estimate of the retention time shift of a particular target analyte. In some examples, the neighbor cross-correlation for each neighbor analyte is determined in the same or a similar way as the target cross-correlation is determined for the target analyte, as described above with regard to method 500.

The neighbor cross-correlation technique is more specific to an analyte of interest than the current Adaptive RT cross-correlation techniques. When used for post-acquisition processing, a neighbor cross-correlation may be formed from just those analytes that have been unambiguously identified, for example using reference data found through a database search. The neighbor cross-correlation may also be updated to account for differing rates of elution time drift of those neighbors that have been unambiguously identified. For example, one neighbor may drift more in retention time than another. This updating can happen in a post-processing scenario, or for the real-time alignment scenario.

System 400 may use any suitable number of neighbor analytes to facilitate peak picking for a target analyte of interest, determining a retention time shift, and/or for any other suitable purpose. For example, system 400 may use a first neighbor analyte and a second neighbor analyte that each elute adjacent in time to the target analyte. In certain examples, elution peaks of the first neighbor analyte may be directly temporally adjacent to elution peaks of the target analyte. That is, there may be no elution peaks between the elution peaks of the target analyte and the elution peaks of the first neighbor analyte. In such examples, the target analyte may have a first retention time, the first neighbor analyte may have a second retention time, the second neighbor analyte may have a third retention time, and the first retention time may be temporally between the second retention time and the third retention time.

In other examples, system 400 may use as neighbor analytes all analytes that elute within a neighborhood time window of the target analyte, where the neighborhood time window is a time window that encompasses elution of the target analyte. For example, the neighborhood time window may span 0.5 minutes on either side of elution of the target analyte. Accordingly, all analytes within the neighborhood time window, or a set of analytes within the neighborhood time window that satisfy a threshold condition (e.g., minimum observed signal level, peak width, etc.), may be used as neighbor analytes.

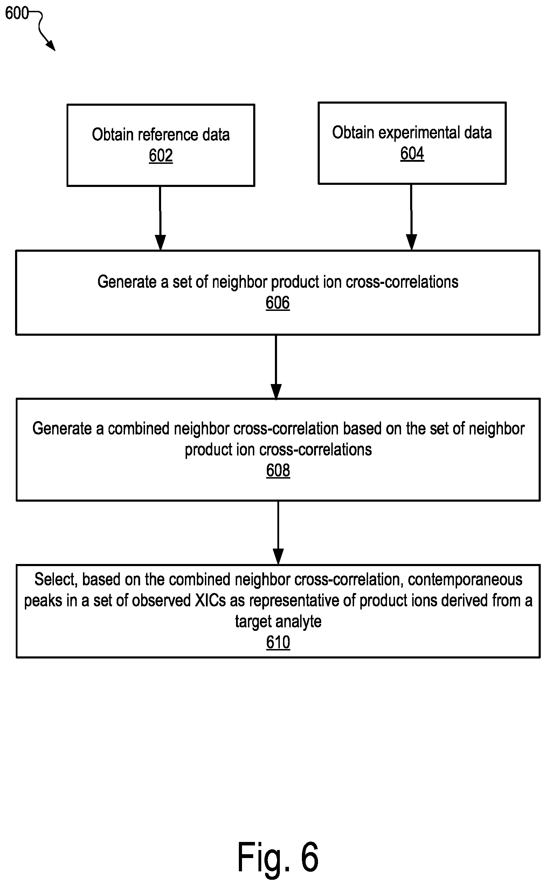

FIG. 6 shows an illustrative flow diagram 600 that depicts various operations that may be performed by system 400 when using neighbor cross-correlations to facilitate peak picking. While FIG. 6 shows illustrative operations according to one embodiment, other embodiments may omit, add to, reorder, and/or modify any of the operations shown in FIG. 6. FIG. 6 is described with reference to cross-correlations, but any other similarity correlations, including any similarity correlations described herein, may be used.

At operation 602, system 400 obtains reference data representative of mass spectral intensity as a function of time for a plurality of target analytes. System 400 may obtain the reference data in any suitable manner, including any manner described herein. The reference data obtained at operation 602 may include a reference XIC for each characteristic product ion (or selected m/z for the product ion) in a set of characteristic product ions derived from a first neighbor analyte. The first neighbor analyte has an expected elution time within a threshold time of an elution time of the target analyte. In certain examples, the reference data may further include a reference XIC for each characteristic product ion in a set of characteristic product ions derived from a second neighbor analyte. The second neighbor analyte also has an expected elution time within the threshold time of the elution time of the target analyte.

The threshold elution time may correspond to any suitable amount of time as may serve a particular implementation. For example, the threshold elution time may be 0.25 minutes in certain examples, thus creating an neighborhood time window of 0.5 minutes centered around the elution time of the target analyte. To illustrate an example, the elution time of the target analyte may be 5.5 minutes. The expected elution time of the first neighbor analyte may be 5.6 minutes and the expected elution time of the second neighbor analyte may be 5.4 minutes, both of which are within the threshold elution time of 0.25 minutes.

At operation 604, system 400 obtains experimental data that includes an observed XIC for each m/z corresponding to the m/z of a characteristic product ion derived from the first neighbor analyte. In certain examples, the experimental data may further include an observed XIC for each m/z corresponding to the m/z of a characteristic product ion derived from the second neighbor analyte. In certain examples, the first neighbor analyte and/or the second neighbor analyte may be specifically included in or added to the sample to facilitate selection of contemporaneous peaks in a set of observed XICs.

At operation 606, system 400 generates a set of individual neighbor product ion cross-correlations for each neighbor analyte that is used to facilitate peak picking for a target analyte. This may be accomplished in any suitable manner. For example, system 400 may generate, for the first neighbor analyte, a first set of individual neighbor product ion cross-correlations by cross-correlating each reference XIC of the first neighbor analyte with a corresponding observed XIC of the first neighbor analyte. In certain examples, system 400 may generate, for the second neighbor analyte, a second set of individual neighbor product ion cross-correlations by cross-correlating each reference XIC of the second neighbor analyte with a corresponding observed XIC of the second neighbor analyte.

At operation 608, system 400 generates, for each neighbor analyte that is used to facilitate peak picking for the target analyte, a neighbor cross-correlation based on the set of individual neighbor product ion cross-correlations for the neighbor analyte. This may be accomplished in any suitable manner. For example, system 400 may generate a first neighbor cross-correlation for the first neighbor analyte by combining individual neighbor cross-correlations for the first analyte, such as by summing the individual neighbor product ion cross-correlations included in the first set of individual neighbor product ion cross-correlations for the first neighbor analyte. Alternatively, system 400 may generate the first combined neighbor cross-correlation in a manner similar to generating the target cross-correlation described above, such as by multiplying or adding the individual neighbor product ion cross-correlations included in the first set of individual neighbor product ion cross-correlations for the first neighbor analyte.

Similarly, system 400 may generate a second neighbor cross-correlation for the second neighbor analyte by combining individual neighbor cross-correlations for the second analyte, such as by summing the individual neighbor product ion cross-correlations included in the second set of individual neighbor product ion cross-correlations for the second neighbor analyte. Alternatively, system 400 may generate the second neighbor cross-correlation in a manner similar to generating the target cross-correlation described above, such as by multiplying or adding individual neighbor product ion cross-correlations included in the second set of individual neighbor product ion cross-correlations for the second neighbor analyte.

System 400 may repeat this process for any suitable number of neighbor analytes.

At operation 610, system 400 may select, based on one or more neighbor product ion cross-correlations generated at operation 608, contemporaneous peaks in a set of observed XICs as representative of product ions derived from the target analyte. Operation 610 may be performed in any suitable manner. In certain examples, system 400 generates a combined neighbor cross-correlation and determines a total cross-correlation for the target analyte based on the combined neighbor cross-correlation and the target correlation for the target analyte.

In some examples, the combined neighbor cross-correlation is generated by summing the neighbor cross-correlations determined at operation 608. In other examples, the combined neighbor cross-correlation is generated by multiplying the neighbor cross-correlations (e.g., similar to determination of the target cross-correlation in method 500). The target cross-correlation for the target analyte is determined as described above with regard to method 500.

System 400 may determine the total correlation in any suitable way, such as by multiplying or adding the combined neighbor cross-correlation and the target cross-correlation for the target analyte. The total correlation plots a total correlation value as a function of time and may include one or more candidate correlation peaks. System 400 may select the contemporaneous peaks in the set of observed XICs based on the total correlation. For example, system 400 may score each of a plurality of contemporaneous chromatographic peaks in the set of observed XICs that are candidates for the target analyte and select the contemporaneous peaks having the highest score as being representative of product ions derived from the target analyte. For example, as described above each candidate peak's score (e.g., the dot product from a cosine similarity) may be adjusted by multiplying the peak's score by the value of the total correlation at the peak's respective retention time. Alternatively, system 400 may select the set of contemporaneous peaks as the contemporaneous peaks that correspond in time to the candidate correlation peak having the highest total correlation value.

In some examples, the total cross-correlation may also be based on other correlations in addition to the neighbor cross-correlations and the target cross-correlation. For example, the total cross-correlation may also be based on a correlation of background signal, as generated and described in the Adaptive RT techniques described above.

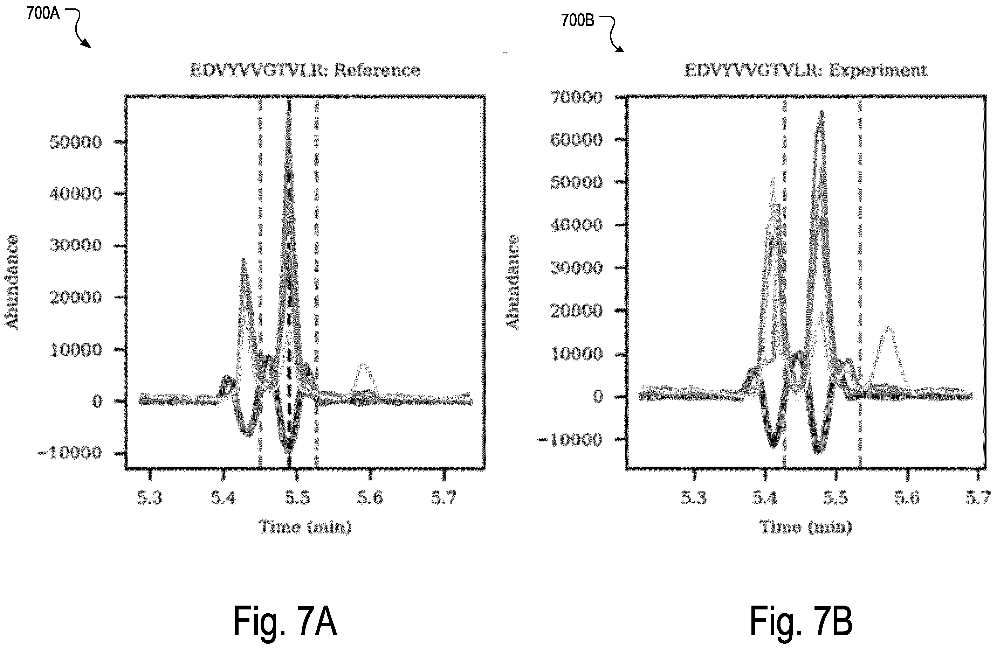

To illustrate an example, FIGS. 7A through 8B illustrate how neighbor cross-correlations may be used in a post-processing scenario to aid in the identification of peaks and setting integration boundaries. In this example, the signals from the target peptide EDVYVVGTVLR are used. FIG. 7A depicts a diagram 700A representing reference data for the target peptide EDVYVVGTVLR. FIG. 7A shows a set of reference XICs for a plurality of characteristic product ions derived from the target peptide, where the XICs are superimposed on one another. Each XIC includes three distinct elution peaks, and the elution peak corresponding to the target peptide is identified as the center peak between the dashed lines.

FIG. 7B depicts a diagram 700B representing observed experimental data. FIG. 7B shows an observed XIC for each m/z corresponding to the m/z of a characteristic product ion derived from the target peptide, where the observed XICs are superimposed on one another. Each observed XIC includes three candidate elution peaks for the target peptide.

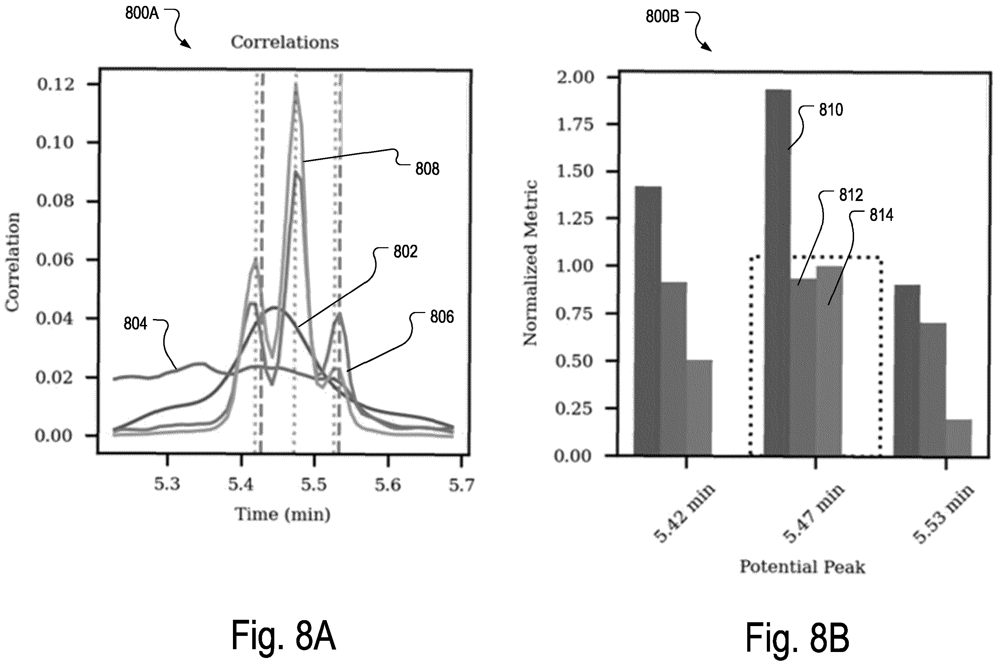

FIG. 8A depicts a diagram 800A that shows various cross-correlations that may be generated based on the data represented in FIGS. 7A and 7B. For example, the cross-correlations shown in FIG. 8A include a combined neighbor cross-correlation 802, a background cross-correlation 804 (e.g., based on Adaptive RT), a target cross-correlation 806, and a total cross-correlation 808.

The combined neighbor cross-correlation 802 is calculated as described above with regard to method 600. In some examples, the combined neighbor cross-correlation 802 is formed from the sum of neighbor correlations of two or more neighboring analytes within a retention time window encompassing the target analyte. In other examples, the combined neighbor cross-correlation is formed by multiplying the contributions of each neighbor cross-correlation together to increase the selectivity of that signal, especially if the neighbor set contained only signals from an unambiguously identified analyte. In the example of Fig. 8A, the inclusion of the combined neighbor cross-correlation 802 reduces the intensity of the erroneous peak on the right side of the target cross-correlation 806 because the neighbor correlation peak is further to the left.

As shown in FIG. 8A, background cross-correlation 804 from the Adaptive RT algorithm is generally flat over the region of retention times considered. While such information may help locate candidate peaks to within a region of half a minute or so, it is not as useful as the neighbor correlation within a narrower neighborhood. This observation lends credence to the idea that the neighbor correlation may be used instead of or in addition to the global Adaptive RT correlation to allow for narrower scheduled acquisition windows than Adaptive RT allows by itself. The neighbor correlation concepts also have important practical advantages over Adaptive RT, where in the first case, it can be performed on an assay without the addition of any other acquisition than those in the targeted schedule, and also that it can be performed easily by a triple quadrupole instrument, while the Adaptive RT has mostly been done using large spectral m/z ranges, which are slow on a triple quadrupole instrument. To extract the most value from the neighborhood cross correlations in either the post-processing or real-time alignment forms, it may be advantageous to specifically include more targets in the schedule than an assay previously would have called for. For example, an algorithm may identify a set of high abundance analytes in a sample and include them in the assay, or alternatively a set of analytes may be purposely included in the sample for the sole purpose of performing neighborhood alignment.

FIG. 8B depicts a diagram 800B that shows scoring of each candidate peak based on the total correlation. The total cross-correlation 808 is centroided to generate 3 candidate peaks. As shown in FIG. 8B, an adjusted peak score 810, a dot product 812 (calculated, for example, based on a cosine similarity metric), and a total correlation 814, obtained from total correlation 808, are provided for each candidate peak. Peak score 810 may be generated from a sum or weighted sum of the peak dot product 812 and the peak total correlation 814. The peak score 810 may also be calculated based on other combinations of the dot product 812 and total correlation 814, such as by multiplying the dot product 812 by the total correlation 814. As shown in FIG. 8B, the highest score is the correct peak in the middle. Accordingly, system 400 may select the middle set of contemporaneous peaks as corresponding to the target analyte.

Because no algorithm for peak picking is perfect, system 400 may be configured to use and/or provide aggregated information from multiple experiments to facilitate finding errors and/or making corrections.

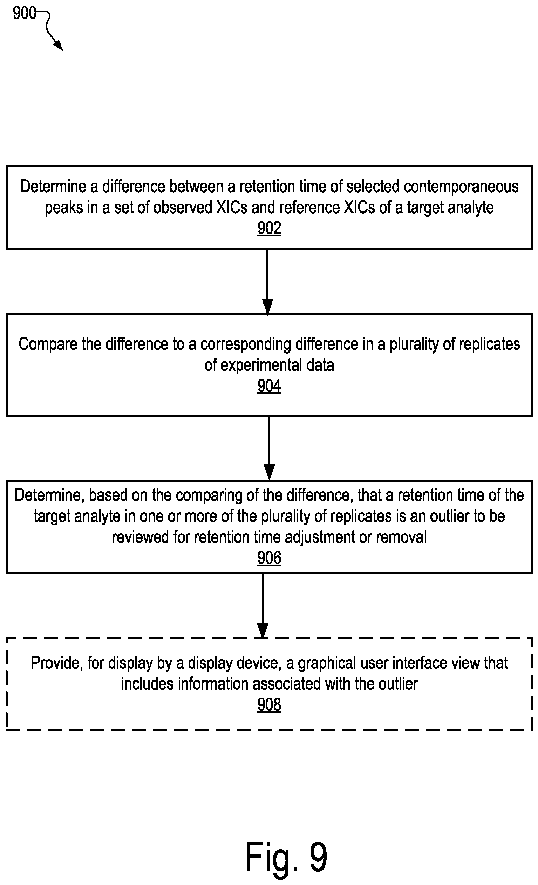

FIG. 9 shows an illustrative flow diagram 900 depicting various operations that may be performed by system 400 in using such aggregated information. While FIG. 9 shows illustrative operations according to one embodiment, other embodiments may omit, add to, reorder, and/or modify any of the operations shown in FIG. 9.

At operation 902, system 400 determines a difference between a retention time of selected contemporaneous peaks in a set of observed XICs and reference XICs of a target analyte.

At operation 904, system 400 compares the difference to a corresponding difference in a plurality of replicates of experimental data. This may be accomplished in any suitable manner such as described below.

At operation 906, system 400 determines, based on the comparing of the difference, that a retention time of the target analyte in one or more of the plurality of replicates is an outlier to be reviewed for retention time adjustment or removal. This may be accomplished in any suitable manner.

To illustrate an example, system 400 may use retention times of high quality ("best") replicates to impute the retention times of lower quality replicates. System 400 may be configured to use neighborhood correlations in this process, with the idea that an analyte peak of interest should probably elute with a fixed time relationship to the neighbor correlation peak. Call the quantity *RT_{analyte} - RT_{neighborCorr} =* Δ*Neighbor.* Assuming that this value for Δ*Neighbor* should be a constant for a set of replicate experiments, then outliers may be found by comparing particular Δ*Neighbor* values to those of the best set.

Dilution curve experiments of E. coli into a background HeLa matrix may be used to illustrate these concepts. Dilution curves are excellent tests of a peak picking algorithm, because by design, the analytes are reduced to below the threshold of detection. Various metrics for the picked peaks may be performed, where the data are sorted by the dot product value. The more dilute replicates have lower dot product and lower delta score, and there is a distinct concentration below which the replicate retention times and Δ*Neighbor* values are different than the best set. Here, the best set may be comprised of those replicates that have a dot product score within 3% of the maximum dot product score. The Δ*Neighbor* and retention time values of the best set may be analyzed with a k-means clustering algorithm and exclude any values that are not in the majority cluster. Any suitable methodology may be used to determine which replicates are outliers. For example, a t-test or additional k-means clustering analysis using these or other metrics may be implemented in certain examples. In certain examples outliers may be determined in the following way: the standard deviation *σ* and mean *µ* of the Δ*Neighbor* values for the best set may be determined. Any replicate with Δ*Neighbor* outside the range *µ* ± *σ* may be considered as an outlier, and its retention time may be adjusted to have the same Δ*Neighbor* as the best set, with integration boundary width the same as the best set. Alternatively, the candidate peak with Δ*Neighbor* nearest to the mean of the best set *µ* could be selected and integration boundaries determined from that peak's data.

Next, the retention time values may be considered. Any replicate with a retention time outside the range *mostRecentBestRT* ± *σ* may be considered to be an outlier, where standard deviation *σ* is determined from the Δ*Neighbor* values of the best set. Any outlier may be set to have the same integration bounds as the most recent replicate. Alternatively, the peak could be chosen that is closest to the retention time of the most recent best replicate and separately determined the integration bounds around that peak. The benefit supplied from the Δ*Neighbor* analysis is that trying to use the standard deviation of the retention times of the best set might not be robust in general, especially when retention time drift or shift may be present over the course of the replicates. The Δ*Neighbor* values should be more constant than the retention times and therefore their standard deviation is more useful to determine the natural variation in peak picking precision. Instead of searching for ΔNeighbor outliers, system 400 may instead just use the standard deviation *σ* of the ΔNeighbor from the best set, and only search for retention time outliers. For certain analytes, this may result in a more precise determination of retention times.

The concept of correcting peak picking results may be used to update the neighbor reference values used for subsequent post-processing or real-time analysis. For example, neighbor analyte retention times may initially be identified via peptide detection, or cross correlation analysis, and/or the post-peak-picking correction techniques described above. The newly updated data for the unambiguously detected neighbors may be used for subsequent analysis with improved efficacy compared to a reference data set acquired under conditions where a different set of neighbors could be detected, and where the neighbors had different retention times.

Data analysts currently spend a lot of time reviewing the data to search for those few percent of outlier cases. For experiments with hundreds of analytes or replicates, this process becomes increasingly infeasible. With all the improvements described herein, it is possible to significantly reduce inaccurate peak selection. However, the user still needs tools to quickly investigate any possible problems and apply possible remedies to them. Accordingly, system 400 may be configured to provide, for display by a display device, any suitable information associated with target analytes.

At operation 908, system 400 may provide, for display by a display device, a graphical user interface view that includes information associated with the outlier. System 400 may provide any suitable information in the graphical user interface view as may serve a particular implementation.

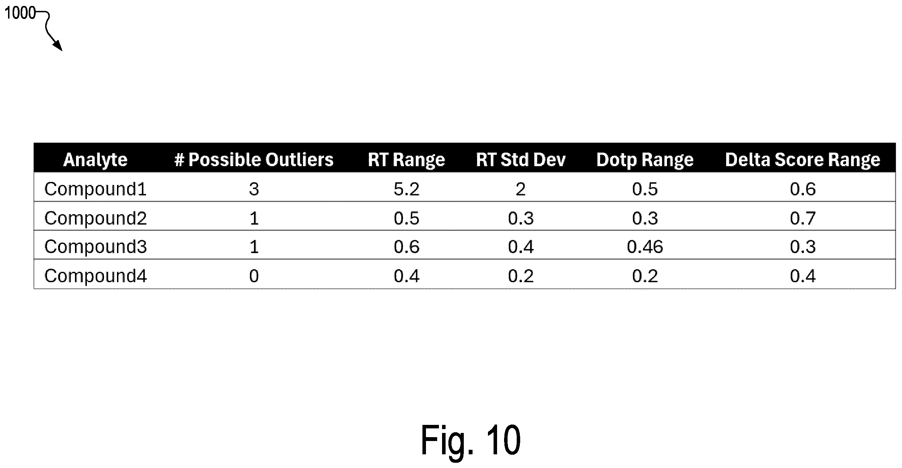

FIG. 10 shows an illustrative graphical user interface view 1000 that provides information associated with various outliers. As shown in FIG. 10, graphical user interface view 1000 includes information identifying a plurality of analytes, the number of outliers for each analyte, retention time range, retention time standard deviation, dot product range, and delta score range for each of the plurality of analytes. Through graphical user interface view 1000 a user is presented with a condensed view of compounds and relevant summary metrics. Graphical user interface view 1000 may be considered as a condensed view in that it may only contain information associated with those analytes the have possible issues.

Graphical user interface view 1000 shows the information in the form of a table. However, it is understood that such information may be presented in any other suitable manner. For example, instead of a table, the compounds may be presented via a plot of a distribution of parameters such as the retention time range, where the problematic compounds are denoted by a different color of the data in a certain range. The compounds may be presented in a scatter plot where the x and y axes correspond to a direction in a hyperdimensional space, such as with principal component analysis (PCA) or uniform manifold approximation and projection (UMAP). Selecting a compound, such as clicking a mouse or pointer on a row or part of the metric graph, or scatter plot marker, may reveal a more detailed description of the metrics for the compound and each of its replicates. Selecting any particular replicate may present a visualization of other data for that replicate, such as its characteristic extracted product ion chromatograms. As another example, a series of graphs may be displayed when a compound is selected that summarizes the retention times for the compound. The graphs may indicate which replicates are possibly problematic, according to the application of various techniques or metrics such as a clustering analysis or an outlier analysis. System 400 may present a user with an option to "fix" any problems via various means, such as by setting all outlier replicates, or a selected outlier replicate, to have the retention time of the most recent replicate in the "best" set, or to have a retention time such that the new Δ*Neighbor* value is the same as that of the best set. In certain examples, system 400 may present a user with a list of the replicates in the best set and the user may manually add or remove replicates from this set.

In certain implementations, system 400 may be configured to automatically perform one or more operations associated with mass spectrometry data. As used herein, "automatically" means system 400 may perform one or more operations without requiring any additional input from a user. For example, system 400 may automatically apply certain retention time correction algorithms to the data set. In such examples, the list of potential problems displayed to the user may be retrospective in nature, giving a summary of which problems were fixed, in which way they were fixed (such as by listing the old and new retention times, or by displaying these times in a graph), as well as showing any compounds with remaining potential problems.

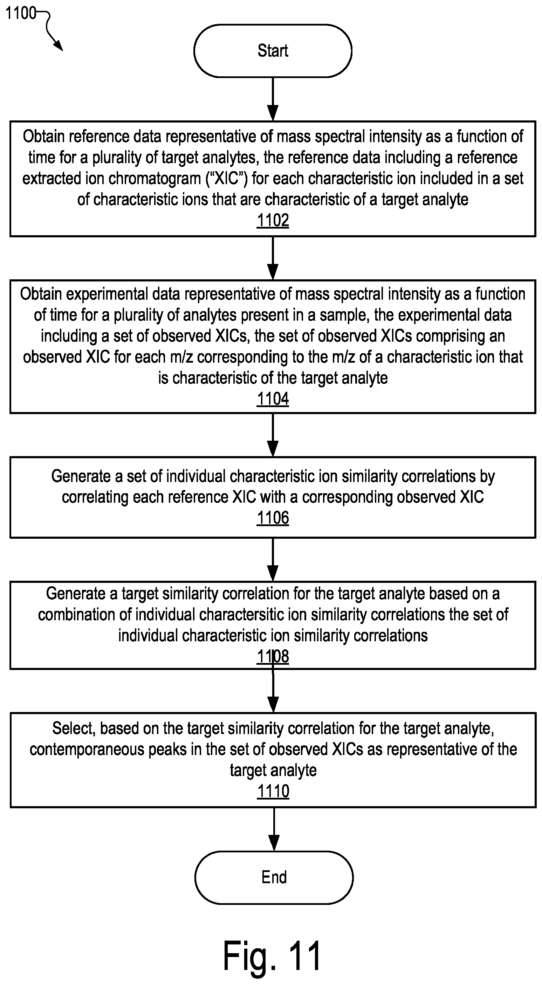

FIG. 11 shows an illustrative method 1100 for improved quantitative analysis in targeted mass spectrometry. While FIG. 11 shows illustrative operations according to one embodiment, other embodiments may omit, add to, reorder, and/or modify any of the operations shown in FIG. 11.

At operation 1102, a mass spectrometry analysis system (e.g., mass spectrometry analysis system 400) obtains reference data representative of mass spectral intensity as a function of time for a plurality of target analytes. The reference data includes a reference extracted ion chromatogram ("XIC") for each characteristic ion included in a set of characteristic ions that are characteristic of a target analyte. Operation 1102 may be performed in any of the ways described herein.

At operation 1104, system 400 obtains experimental data representative of mass spectral intensity as a function of time for a plurality of analytes present in a sample. The experimental data includes a set of observed XICs. The set of observed XICs comprises an observed XIC for each m/z corresponding to the m/z of a characteristic ion that is characteristic of the target analyte. Operation 1104 may be performed in any of the ways described herein.

At operation 1106, system 400 generates a set of individual characteristic ion similarity correlations by correlating each reference XIC with a corresponding observed XIC. Operation 1106 may be performed in any of the ways described herein.

At operation 1108, system 400 generates a target similarity correlation for the target analyte based on combination of individual characteristic ion similarity correlations included in the set of individual characteristic ion similarity correlations. Operation 1108 may be performed in any of the ways described herein.

At operation 1110, system 400 selects, based on the target similarity correlation for the target analyte, contemporaneous peaks in the set of observed XICs as representative of the target analyte. Operation 1110 may be performed in any of the ways described herein.

In certain implementations, the experimental data may include sudden retention time shifts that may be difficult to account for using the methods described above. In such examples, system 400 may be configured to use a reference data to experimental data comparison, as described above, but use experimental data from one or more recently-acquired replicates as the reference data. When the analyte is observed at relatively high concentrations, the raw reference data provides sufficient information to correctly localize the integration boundary region. At lower concentrations, an improvement may be found by removing, from the reference data, the time-region of the expected elution of the analyte and aligning the remaining reference data to the experimental data on each side of the expected peak. When setting boundaries for heavy-labeled peptides, a reference may be created from the corresponding endogenous acquisition data, helping to ensure that the integration bounds are the same relative to this other source of data. After completing such a comparison process, system 400 may implement any suitable neighbor and/or RT outlier analysis as described herein.

The preceding disclosure describes using correlations to improve quantitative analysis in targeted mass spectrometry experiments. However, the principles described herein may be applied with other types of mass spectrometry experiments. For example, the systems and methods described herein may also be applied in data independent analysis (DIA) experiments where one acquisition may analyze multiple target analytes of interest. The methods described herein may be applied in the same or a similar way as for acquisitions that target a single analyte of interest (e.g., a single precursor ion) by deconvoluting a DIA mass spectrum to obtain a set of characteristic ion XICs for each analyte of interest that is represented in the DIA mass spectrum. Techniques for deconvolution of a DIA mass spectrum are known to persons of skill in the art and thus will not be described. In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

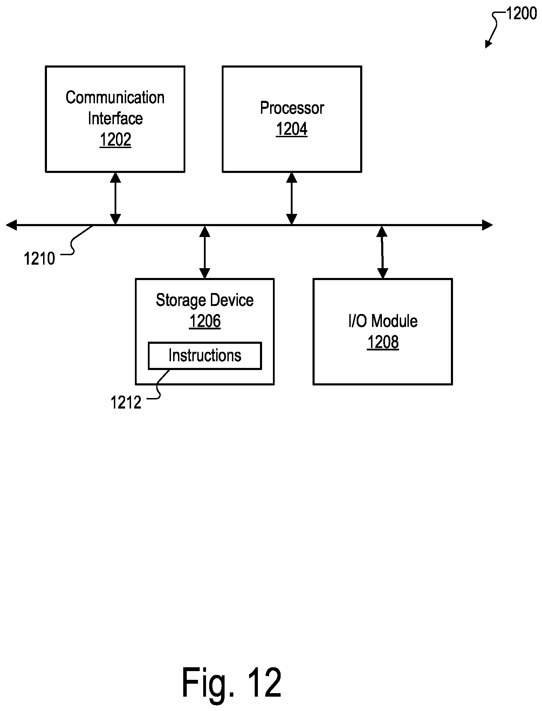

FIG. 12 shows an illustrative computing device 1200 that may be specifically configured to perform one or more of the processes described herein. As shown in FIG. 12, computing device 1200 may include a communication interface 1202, a processor 1204, a storage device 1206, and an input/output ("I/O") module 1208 communicatively connected one to another via a communication infrastructure 1210. While an illustrative computing device 1200 is shown in FIG. 12, the components illustrated in FIG. 12 are not intended to be limiting. Additional or alternative components may be used in other embodiments. Components of computing device 1200 shown in FIG. 12 will now be described in additional detail.

Communication interface 1202 may be configured to communicate with one or more computing devices. Examples of communication interface 1202 include, without limitation, a wired network interface (such as a network interface card), a wireless network interface (such as a wireless network interface card), a modem, an audio/video connection, and any other suitable interface.

Processor 1204 generally represents any type or form of processing unit capable of processing data and/or interpreting, executing, and/or directing execution of one or more of the instructions, processes, and/or operations described herein. Processor 1204 may perform operations by executing computer-executable instructions 1212 (e.g., an application, software, code, and/or other executable data instance) stored in storage device 1206.

Storage device 1206 may include one or more data storage media, devices, or configurations and may employ any type, form, and combination of data storage media and/or device. For example, storage device 1206 may include, but is not limited to, any combination of the non-volatile media and/or volatile media described herein. Electronic data, including data described herein, may be temporarily and/or permanently stored in storage device 1206. For example, data representative of computer-executable instructions 1212 configured to direct processor 1204 to perform any of the operations described herein may be stored within storage device 1206. In some examples, data may be arranged in one or more databases residing within storage device 1206.

I/O module 1208 may include one or more I/O modules configured to receive user input and provide user output. One or more I/O modules may be used to receive input for a single virtual experience. I/O module 1208 may include any hardware, firmware, software, or combination thereof supportive of input and output capabilities. For example, I/O module 1208 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1208 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1208 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 1200. For example, memory 402 may be implemented by storage device 1206, and processor 404 may be implemented by processor 1204.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Advantages and features of the present disclosure can be further described by the following examples:
1. A system comprising: a memory that stores instructions; and a processor communicatively coupled to the memory and configured to execute the instructions to perform a process comprising: obtaining reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating a set of individual characteristic ion similarity correlations by correlating each reference XIC with a corresponding observed XIC; generating a target similarity correlation for the target analyte based on a combination of individual characteristic ion similarity correlations included in the set of individual characteristic ion similarity correlations; and selecting, based on the target similarity correlation for the target analyte, contemporaneous peaks in the set of observed XICs as representative of the target analyte.
2. The system of the preceding statement, wherein the set of characteristic ions that are characteristic of the target analyte includes a set of characteristic product ions that are derived from the target analyte.
3. The system of any of the preceding statements, wherein the set of characteristic ions that are characteristic of the target analyte includes a precursor ion of the target analyte.
4. The system of any of the preceding statements, wherein the combination of the individual characteristic ion similarity correlations included in the set of individual characteristic ion similarity correlations includes a multiplication of the individual characteristic ion similarity correlations.
5. The system of any of the preceding statements, wherein the combination of the individual characteristic ion similarity correlations included in set of individual characteristic ion similarity correlations includes an addition of the individual characteristic ion similarity correlations.
6. The system of any of the preceding statements, wherein the generating of the set of individual characteristic ion similarity correlations includes cross-correlating each reference XIC with the corresponding observed XIC.
7. The system of any of the preceding statements, wherein: the reference data further includes a reference XIC for each characteristic ion in a set of characteristic ions that are characteristic of a first neighbor analyte having an expected elution time within a threshold time of an elution time of the target analyte; the set of observed XICs further includes an observed XIC for each m/z corresponding to the m/z of a characteristic ion that is characteristic of the first neighbor analyte; the process further comprises: generating, for the first neighbor analyte, a set of individual neighbor characteristic ion similarity correlations by correlating each reference XIC of the first neighbor analyte with a corresponding observed XIC of the first neighbor analyte; and generating, for the first neighbor analyte, a combined neighbor similarity correlation based on the set of individual neighbor characteristic ion similarity correlations; and the selecting of the contemporaneous peaks in the set of observed XICs as representative of the target analyte is further based on the combined neighbor similarity correlation.
8. The system of any of the preceding statements, wherein the generating of the combined neighbor similarity correlation for the first neighbor analyte includes summing neighbor characteristic ion similarity correlations included in the set of individual neighbor characteristic ion similarity correlations for the first neighbor analyte.
9. The system of any of the preceding statements, wherein the generating of the combined neighbor similarity correlation includes multiplying neighbor characteristic ion similarity correlations included in the set of individual neighbor characteristic ion similarity correlations for the first neighbor analyte.
10. The system of any of the preceding statements, wherein the process further comprises calculating a combined target similarity correlation based on the combined neighbor similarity correlation and the target similarity correlation.
11. The system of any of the preceding statements, wherein the calculating of the combined target similarity correlation includes multiplying or adding the target similarity correlation and the combined neighbor similarity correlation.
12. The system of any of the preceding statements, wherein elution peaks of the first neighbor analyte are directly temporally adjacent to elution peaks of the target analyte.
13. The system of any of the preceding statements, wherein: the reference data further includes a reference XIC for each characteristic ion in a set of characteristic ions that are characteristic of a second neighbor analyte having an additional expected elution time within the threshold time of the elution time of the target analyte; the set of observed XICs further includes an observed XIC for each m/z corresponding to the m/z of a characteristic ion that is characteristic of the second neighbor analyte; and the generating of the set of neighbor characteristic ion similarity correlations further includes correlating the reference XICs of the second neighbor analyte with the corresponding observed XICs of the second neighbor analyte.
14. The system of any of the preceding statements, wherein: the target analyte has a first retention time; the first neighbor analyte has a second retention time; the second neighbor analyte has a third retention time; and the first retention time is temporally between the second retention time and the third retention time.
15. The system of any of the preceding statements, wherein the first neighbor analyte is specifically included in the sample to facilitate selection of the contemporaneous peaks in the set of observed XICs.
16. The system of any of the preceding statements, wherein the process further comprises quantifying the target analyte based on the selected contemporaneous peaks in the set of observed XICs.
17. The system of any of the preceding statements, wherein: the process further comprises determining a score for the selected contemporaneous peaks in the set of observed XICs; and the selecting of the contemporaneous peaks in the set of observed XICs is based on the score.
18. The system of any of the preceding statements, wherein the determining of the score includes multiplying a dot product of the contemporaneous peaks in the set of observed XICs by the target similarity correlation.
19. The system of any of the preceding statements, wherein the process further comprises: determining, based on the target similarity correlation, a retention time shift for the target analyte; and updating, based on the retention time shift, an analyte target schedule for the target analyte.
20. The system of any of the preceding statements, wherein the process further comprises: determining a difference between a retention time of the selected contemporaneous peaks in the set of observed XICs and the reference XICs of the target analyte; comparing the difference to a corresponding difference in a plurality of replicates of the experimental data; and determining, based on the comparing of the difference, that a retention time of the target analyte in one or more of the plurality of replicates is an outlier to be reviewed for retention time adjustment or removal.
21. The system of any of the preceding statements, wherein the process further comprises providing, for display by a display device, a graphical user interface view that includes information associated with the outlier.
22. The system of any of the preceding statements, wherein the reference data includes recently-acquired replicate experiment data.
23. A computer program product embodied in a non-transitory computer readable storage medium and comprising computer instructions for performing a process for mass spectrometry comprising: obtaining reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating a set of individual characteristic ion similarity correlations by correlating each reference XIC with a corresponding observed XIC; generating a target similarity correlation for the target analyte based on a combination of individual characteristic ion similarity correlations included in the set of individual characteristic ion similarity correlations; and selecting, based on the target similarity correlation for the target analyte, contemporaneous peaks in the set of observed XICs as representative of the target analyte.
24. The computer program product of the preceding statement, wherein: the reference data further includes a reference XIC for each characteristic ion in a set of characteristic ions that are characteristic of a first neighbor analyte having an expected elution time within a threshold time of an elution time of the target analyte; the set of observed XICs further includes an observed XIC for each m/z corresponding to the m/z of a characteristic ion that is characteristic of the first neighbor analyte; the process further comprises: generating, for the first neighbor analyte, a set of individual neighbor characteristic ion similarity correlations by correlating each reference XIC of the first neighbor analyte with a corresponding observed XIC of the first neighbor analyte; and generating, for the first neighbor analyte, a combined neighbor similarity correlation based on the set of individual neighbor characteristic ion similarity correlations; and the selecting of the contemporaneous peaks in the set of observed XICs as representative of the target analyte is further based on the combined neighbor similarity correlation.
25. A method comprising: obtaining, by a mass spectrometry analysis system, reference data representative of mass spectral intensity as a function of time for a plurality of target analytes, the reference data including a reference extracted ion chromatogram ("XIC") for each characteristic ion included in a set of characteristic ions that are characteristic of a target analyte; obtaining, by the mass spectrometry analysis system, experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte; generating, by the mass spectrometry analysis system, a set of individual characteristic ion similarity correlations by correlating each reference XIC with a corresponding observed XIC; generating, by the mass spectrometry analysis system, a target similarity correlation for the target analyte based on a combination of individual characteristic ion similarity correlations included in the set of individual characteristic ion similarity correlations; and selecting, by the mass spectrometry analysis system and based on the target similarity correlation for the target analyte, contemporaneous peaks in the set of observed XICs as representative of the target analyte.
26. The method of the preceding statement, wherein: the reference data further includes a reference XIC for each characteristic ion in a set of characteristic ions that are characteristic of a first neighbor analyte having an expected elution time within a threshold time of an elution time of the target analyte; the set of observed XICs further includes an observed XIC for each m/z corresponding to the m/z of a characteristic ion that is characteristic of the first neighbor analyte; the method further comprises: generating, by the mass spectrometry analysis system and for the first neighbor analyte, a set of individual neighbor characteristic ion similarity correlations by correlating each reference XIC of the first neighbor analyte with a corresponding observed XIC of the first neighbor analyte; and generating, by the mass spectrometry analysis system and for the first neighbor analyte, a combined neighbor similarity correlation based on the set of individual neighbor characteristic ion similarity correlations; and the selecting of the contemporaneous peaks in the set of observed XICs as representative of the target analyte is further based on the combined neighbor similarity correlation.

## Claims

1. A system comprising:
a memory that stores instructions; and
a processor communicatively coupled to the memory and configured to execute the instructions to perform a process comprising:
obtaining reference data representative of mass spectral intensity as a function of time for a plurality of target analytes, the reference data including a reference extracted ion chromatogram ("XIC") for each characteristic ion included in a set of characteristic ions that are characteristic of a target analyte;
obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte;
generating a set of individual characteristic ion similarity correlations by correlating each reference XIC with a corresponding observed XIC;
generating a target similarity correlation for the target analyte based on a combination of individual characteristic ion similarity correlations included in the set of individual characteristic ion similarity correlations; and
selecting, based on the target similarity correlation for the target analyte, contemporaneous peaks in the set of observed XICs as representative of the target analyte.

2. The system of claim 1, wherein the set of characteristic ions that are characteristic of the target analyte includes a set of characteristic product ions that are derived from the target analyte.

3. The system of claim 1, wherein the set of characteristic ions that are characteristic of the target analyte includes a precursor ion of the target analyte.

4. The system of claim 1, wherein the combination of the individual characteristic ion similarity correlations included in the set of individual characteristic ion similarity correlations includes a multiplication of the individual characteristic ion similarity correlations.

5. The system of claim 1, wherein the combination of the individual characteristic ion similarity correlations included in set of individual characteristic ion similarity correlations includes an addition of the individual characteristic ion similarity correlations.

6. The system of claim 1, wherein the generating of the set of individual characteristic ion similarity correlations includes cross-correlating each reference XIC with the corresponding observed XIC.

7. The system of claim 1, wherein:
the reference data further includes a reference XIC for each characteristic ion in a set of characteristic ions that are characteristic of a first neighbor analyte having an expected elution time within a threshold time of an elution time of the target analyte;
the set of observed XICs further includes an observed XIC for each m/z corresponding to the m/z of a characteristic ion that is characteristic of the first neighbor analyte;
the process further comprises:
generating, for the first neighbor analyte, a set of individual neighbor characteristic ion similarity correlations by correlating each reference XIC of the first neighbor analyte with a corresponding observed XIC of the first neighbor analyte; and
generating, for the first neighbor analyte, a combined neighbor similarity correlation based on the set of individual neighbor characteristic ion similarity correlations; and
the selecting of the contemporaneous peaks in the set of observed XICs as representative of the target analyte is further based on the combined neighbor similarity correlation.

8. The system of claim 7, wherein the generating of the combined neighbor similarity correlation for the first neighbor analyte includes summing neighbor characteristic ion similarity correlations included in the set of individual neighbor characteristic ion similarity correlations for the first neighbor analyte.

9. The system of claim 7, wherein the generating of the combined neighbor similarity correlation includes multiplying neighbor characteristic ion similarity correlations included in the set of individual neighbor characteristic ion similarity correlations for the first neighbor analyte.

10. The system of claim 7, wherein the process further comprises calculating a combined target similarity correlation based on the combined neighbor similarity correlation and the target similarity correlation.

11. The system of claim 10, wherein the calculating of the combined target similarity correlation includes multiplying or adding the target similarity correlation and the combined neighbor similarity correlation.

12. The system of claim 7, wherein elution peaks of the first neighbor analyte are directly temporally adjacent to elution peaks of the target analyte.

13. The system of claim 7, wherein:
the reference data further includes a reference XIC for each characteristic ion in a set of characteristic ions that are characteristic of a second neighbor analyte having an additional expected elution time within the threshold time of the elution time of the target analyte;
the set of observed XICs further includes an observed XIC for each m/z corresponding to the m/z of a characteristic ion that is characteristic of the second neighbor analyte; and
the generating of the set of neighbor characteristic ion similarity correlations further includes correlating the reference XICs of the second neighbor analyte with the corresponding observed XICs of the second neighbor analyte.

14. A computer program product embodied in a non-transitory computer readable storage medium and comprising computer instructions for performing a process for mass spectrometry comprising:
obtaining reference data representative of mass spectral intensity as a function of time for a plurality of target analytes, the reference data including a reference extracted ion chromatogram ("XIC") for each characteristic ion included in a set of characteristic ions that are characteristic of a target analyte;
obtaining experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte;
generating a set of individual characteristic ion similarity correlations by correlating each reference XIC with a corresponding observed XIC;
generating a target similarity correlation for the target analyte based on a combination of individual characteristic ion similarity correlations included in the set of individual characteristic ion similarity correlations; and
selecting, based on the target similarity correlation for the target analyte, contemporaneous peaks in the set of observed XICs as representative of the target analyte.

15. A method comprising:
obtaining, by a mass spectrometry analysis system, reference data representative of mass spectral intensity as a function of time for a plurality of target analytes, the reference data including a reference extracted ion chromatogram ("XIC") for each characteristic ion included in a set of characteristic ions that are characteristic of a target analyte;
obtaining, by the mass spectrometry analysis system, experimental data representative of mass spectral intensity as a function of time for a plurality of analytes present in a sample, the experimental data including a set of observed XICs, the set of observed XICs comprising an observed XIC for each m/z corresponding to the m/z of a characteristic ion that is characteristic of the target analyte;
generating, by the mass spectrometry analysis system, a set of individual characteristic ion similarity correlations by correlating each reference XIC with a corresponding observed XIC;
generating, by the mass spectrometry analysis system, a target similarity correlation for the target analyte based on a combination of individual characteristic ion similarity correlations included in the set of individual characteristic ion similarity correlations; and
selecting, by the mass spectrometry analysis system and based on the target similarity correlation for the target analyte, contemporaneous peaks in the set of observed XICs as representative of the target analyte.
